# EUROPEAN PATENT APPLICATION

(11) **EP 4 032 943 A1**
(43) Date of publication of application: **27.07.2022**
(21) Application number: 21153464.9
(22) Date of filing: 26.01.2021
(51) Int. Cl.: C08J 3/21, B32B 9/02, B32B 9/04, B32B 21/12, C08J 5/04, B32B 9/06

(54) **MANUFACTURING PROCESS FOR COMPONENTS FROM SUNFLOWER SEED SHELLS, PARTICLE/POLYMER BIOCOMPOSITES, MOLDINGS AND LAMINATES COMPRISING SUNFLOWER SEED SHELLS, AND THEIR USE**

(71) Applicant: ecobrain AG, 6300 Zug (CH)
(72) Inventor: HARSTE, Dirk, 21029 Hamburg (DE)
(74) Representative: Gille Hrabal Partnerschaftsgesellschaft mbB Patentanwälte

(57) **Abstract**

Disclosed is a process for producing a thermoformable and/or embossable particle/polymer biocomposite using a particulate biological substrate S and a polymer P, characterized in that
(i) a substrate S and the polymer P are homogeneously mixed, then
(ii) the substrate S/polymer P mixture is converted into a particle layer, thereafter
(iii) the resulting structure is compressed at a temperature greater than or equal to the glass transition temperature of the polymer P [TgP] to form a thermoformable and/or embossable particle/polymer composite,
where
(a) the substrate S comprises sunflower seed shells; and
(b) the polymer P is thermoplastic and has a TgP ≥ 20 °C measured according to DIN EN ISO 11357-2 (2013-09).

Furthermore, a process for the manufacturing of a particle/polymer molding using said semi-finished biocomposite as a starting material, a particle/polymer molding and its use as an element in buildings or in furniture are disclosed.

## Description

### Description

The invention relates to a process for producing thermoformable and/or embossable thermoplastically bonded particle/polymer biocomposites which do not contain any intentionally added formaldehyde or formaldehyde-containing components, and their use as components. In particular, the particles comprise sunflower seed shells (sunflower seed husks) or sun flower seed shells and wood-based particles.

### Background

One of the major challenges facing humanity in recent years is the reduction of CO₂ emissions in the earth's atmosphere. On the one hand, this is achieved by reducing the use of fossil fuels, but on the other hand, processes for storing CO₂ in the earth are also being investigated. In principle, a first step is the increased use of renewable raw materials in technical areas such as automotive, consumer goods etc., which temporarily store CO₂ at least for a few years and thus are positive in the CO₂ balance in the short term during this phase of use.

It would be particularly desirable if not only newly produced materials could be used for such applications, but also raw materials that would otherwise be discarded as waste.

For furniture or products in automotive applications 3-D-formable components are demanded. Such products obviously cannot be provided by standard duroplastic bonded wood based components (boards).

A third problem is the formaldehyde emission of standard wood based boards like particle boards, MDF, OSB and others bonded with formaldehyde containing resins (e.g. UF, PF, MUF). These binders are also used in most cases in biobased composites. The formaldehyde emission is not only caused by the binder systems, it is also an inherent problem due to the natural formaldehyde content of wood.

A fourth problem is the request, for example in automotive applications and transport, for light weight products. A target density for optimal products should be below 1.0 g/cm³.

The purpose of this invention is therefore to find composites for indoor applications which should provide:
- system for CO₂- storage
- lowest possible formaldehyde emission
- thermoplastic behavior
- density below 1.0 g/cm³
- the use of waste based on renewable raw materials.

A raw material used in the present invention is sunflower seed shells. These are produced in large quantities worldwide as by-product in the process of producing sunflower oil. In the past, the main application of this by-product was its use as a fuel to obtain the energy necessary for that same sunflower oil production process. Sunflower seed shells are also used, in a lesser extent, as a bed for fowl houses.

The main goal in cultivating sunflowers is to obtain the sunflower seeds and their components, respectively, such as sunflower oil. Prior to using the seeds, the shell (husk) is removed from the seed by appropriate machinery. These shells (sometimes also designated as hulls or husks) are thus obtained in large quantities in production of sunflower oil as a waste product and are frequently pressed to form pellets, which are used as fuel. In this process, however, the CO₂ content is released immediately.

An advantage of the sunflower seed shells is not only that they are available in large amounts, but additionally that they are quite small in size and do not require a lot of processing including necessary energy input, such as grinding, for further use in manufacturing composite materials, contrary to wood-based particle board production. Further, their natural formaldehyde content is extremely low in comparison to wood. Some patent documents already propose the use of sunflower seed shells for manufacturing so-called biocomposite products.

US 5,663,221 discloses medium density fiber boards which are made from sunflower seed husks by a method involving impregnating sunflower seed husks with steam, digesting so as to de-fibrate the husks, mixing the de-fibrated sunflower seed husks with a resin, drying the mixture and pressing the dried mixture into a medium density fiber board. The resins are formaldehyde urea resins. The amount of defibrated sunflower seed husks in the total compositions is 80 to 89 % by weight. The obtained products are not thermo-formable, and the resins are containing and emitting formaldehyde.

EP 2 780 256 A1 resp. WO 2013/072146 A1 disclose biocomposite materials based on sunflower seed shells in place of wood, bamboo or other wood-like products for producing biocomposite materials cost-efficiently, and to improve their properties. The amount of sunflower seed shells in the biocomposites may be 50 to 90 % of the final product. Polypropylene (PP), polyethylene (PE), ABS or polyvinyl resins are used as matrix. Production is performed in the same way as with wood plastic composites. In a preferred embodiment, equal amounts of PP and crushed or ground sunflower seed shells are mixed homogeneously and then processed by injection molding or usual plastic processing methods. The biocomposite materials are suitable for automobile parts, films, packaging materials, bags, industrial and consumer goods, floorings and furniture. In this patent application, the sun flower husks are functioning mainly as a filler. The properties of the final product are determined by the used polymers (e.g. PE, PP, ABS). The described compounding process leads to a compact composite with a density > 1.0 g/cm³. The sun flower husks have to be milled to a particle size smaller than 0.5 mm.

WO 2014/184273 A1, similarly, discloses a biomaterial product based on sunflower seed shells instead of wood, bamboo or other wood-like fiber products. The amount of sunflower seed shells in the biocomposite is 20 to 60 % by weight, the density is 1 g/cm³ or more, the elasticity module is 1000 MPa or more, the tensile strength is 10 MPa or more, and the elongation at break at 3 % or more. The resin is selected from polypropylene, polyethylene, polyvinyl chloride, ABS, polylactide, polystyrene, polyamide and mixtures thereof. Sunflower seed shells and resin are compounded and then processed by extrusion, injection molding, rotation molding, pressing, thermoforming or deep drawing. In this patent application, the sun flower husks are functioning mainly as a filler. The properties of the final product are determined by the used polymers (e.g. PE, PP, ABS). The described compounding processes leads to a compact composite with a density > 1.0 g/cm³. The sun flower husks have to be milled to a particle size smaller than 1.0 mm

WO 2017/186743 A1 discloses a process for producing a bioplastic product based on sunflower seed shells comprising providing a compound material, wherein the material is obtained by compounding of a sunflower seed shell material with biodegradable plastic, e.g. polybutylene succinate (PBS), polybutylene succinate adipate (PBSA) or the like. The compounded material is preferably used for the production of injection molded products such as biodegradable containers, packaging, films or the like, in particular of coffee capsules, tea capsules, urns, cups, plant pots, flowerpots or the like. The amount of sunflower seed shell material in the compound is at least 10 % and may be 50 % or more. In this patent application, the sun flower husks are functioning mainly as a filler. The properties of the final product are determined by the used polymers (e.g. PE, PP, ABS). The described compounding processes leads to a compact composite with a density > 1.0 g/cm³. The sun flower husks have to be milled to a particle size smaller than 0.5 mm, and the content of sun flower husks is relatively low (preferably < 50%).

RO 130258 B1 discloses a panel of triple-layered structure made of sunflower seed particles and hulls, wherein the panel is to be employed in indoor decorations, in making furniture parts, wall linings or to be used as sandwich structures for cellular boards used to manufacture interior doors. The article is made of sunflower seed shells, phenol-formaldehyde adhesive, and water for the panel faces and polyurethane adhesive and water for the panel core. The shredded sunflower shells are mixed with a phenol-formaldehyde adhesive in a ratio of 8 %, and 10 % water, the mixture is homogenized, the lower face is formed by cold pressing the mixture with a roll in a plane mold, the core is then prepared using seed hulls mixed with polyurethane adhesive and 15 % water, mixed, then also cold pressed in a mold with a roll, and then the upper face, made in the same way as the lower face, is put on top of the core and the entire mold is introduced into a press and heated to 180 °C at a pressure of 50 bar for 10 min.

In this patent application two crosslinking binders are described: phenol-formaldehyde and PU-adhesives. Therefore a thermoplastic and formaldehyde-free composite cannot be achieved. The final board is a duroplastic board with does not allow further thermoplastic processing for shaping or embossing.

RO 130259 A discloses an ecological board made of sunflower seed hulls for exterior lining in sandwich structures of civil and industrial wooden construction. The board is made of a mixture of sunflower seed hulls as reinforcing elements, polyurethane adhesive, water, and paraffin emulsion. The process consists in mixing the sunflower seed hulls with polyurethane adhesive in a ratio of 5.5 %, water in a ratio of 15 % and paraffin emulsion in a ratio of 1 % at ambient temperature, pouring the mixture into a mold and pressing at 50 bar at 180 °C for 5 minutes. The final board is a duroplastic board with does not allow further thermoplastic processing for shaping or embossing.

The object of the present invention is therefore to provide composites for indoor applications which should provide:
- system for CO₂- storage
- lowest possible formaldehyde emission
- thermoplastic behavior
- density below 1.0 g/cm³
- the use of waste based on renewable raw materials.

The object of the present invention is, further, to provide a process for producing a thermoformable and/or embossable, particle/polymer biocomposite, not comprising any intentionally added formaldehyde, and a particle/polymer molded part obtainable therefrom, which on the one hand has a high proportion of sunflower seed shells and, on the other hand, can be produced at low cost. Optionally, a second particulate biological substrate material, in particular fine wood chips, may be used to obtain layered structures, wherein the layers comprise different biological particulate materials.

This object is achieved by the process according to claim 1.

The object of the present invention is therefore a process for manufacturing a thermoformable and/or embossable particle/polymer biocomposite using at least one particulate biological substrate S and a polymer P, characterized in that
(i) the substrate S and the polymer P are homogeneously mixed, then
(ii) the substrate S/polymer P mixture is converted into a particle layer, thereafter
(iii) the resulting structure is compressed at a temperature greater than or equal to the glass transition temperature of the polymer P [TgP] to form a thermoformable and/or embossable particle/polymer composite,
where
(a) the substrate S comprises sunflower seed shells,
(b) the polymer P is thermoplastic and has a TgP ≥ 20 °C measured according to DIN EN ISO 11357-2 (2013-09), and
(c) the polymer P does not comprise intentionally added formaldehyde or structural moieties derived from formaldehyde.

In one embodiment of the claimed process, an additional biological particulate substrate S', such as fine wood chips, is homogeneously mixed with the polymer P separately, then both mixtures are layered in a frame or on a conveyor belt in an alternating manner, wherein each layer is optionally pre-compressed, and then the layered composition is pressed at temperatures ≥ TgP to form a layered thermoformable biocomposite. Examples are shown in the attached Figures. For example, the lower layer is made of wood chips composite, the middle layer is made of sunflower seed shell composite and the top layer is made again of wood chips composite, and all layers together form the semi-finished biocomposite of the invention. The order and thickness of layers can be adjusted according to required technical properties. However, at least one of the layers necessarily comprises sunflower seed shells as substrate S.

Furthermore, the subject matter of the present invention are the particle/polymer biocomposites themselves, which are obtainable according to the method according to the invention, as well as their use for the manufacturing of particle/polymer moldings, such as elements in buildings such as wall panels, room dividers, floors, tiles, counters and in furniture.

The particle/polymer mixtures are designated as "impregnated sunflower seed shells" and "impregnated chips", respectively, in the experimental part.

The particle/polymer biocomposites are sometimes designated as "semi-finished products", semi-finished biocomposites or "semi-finished boards" in the the present specification.

The particle/polymer moldings obtained from said semi-finished biocomposites are sometimes designated as "laminates" in this specification, in particular when they comprise additional decorative layers, veneers or protective layers.

### Description of the Figures

Figs. 1 to 4 show exemplary but non restrictive laminate structures for molded bodies according to the invention.
Fig. 5 shows a density profile of the laminate obtained in Example 3.

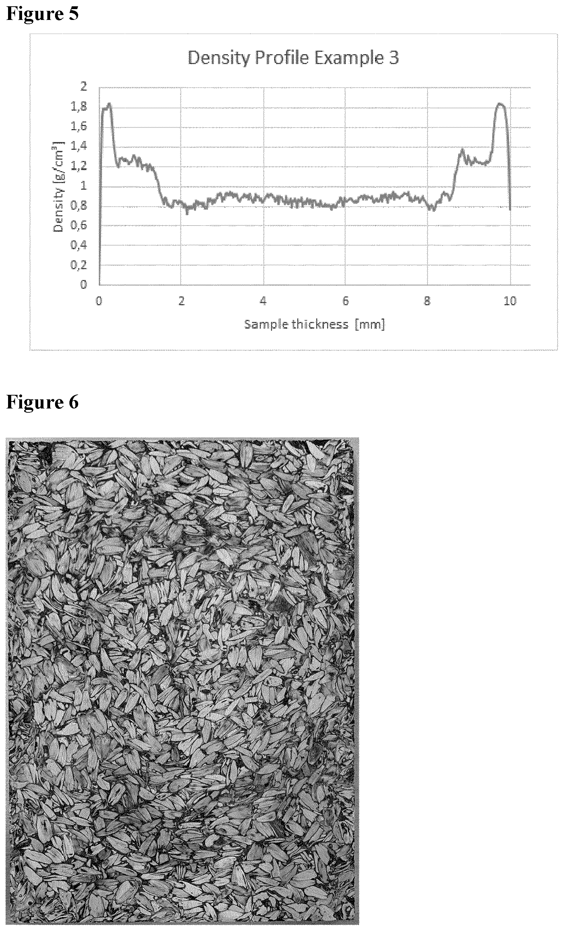

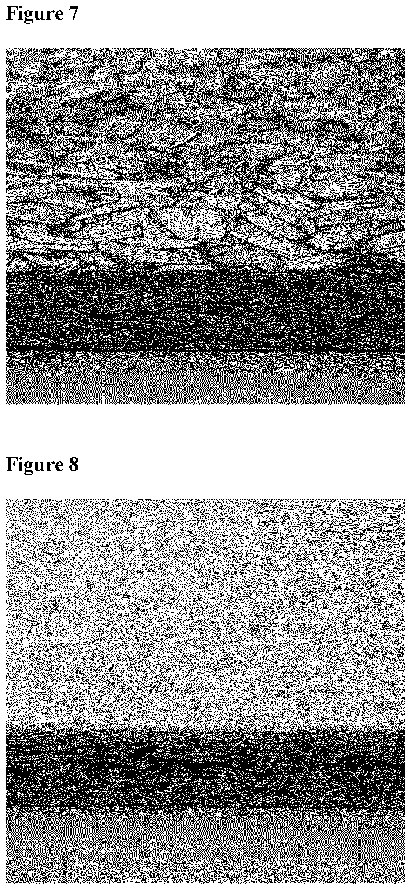

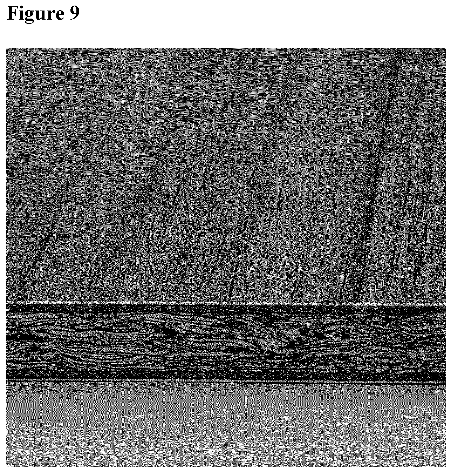

Fig. 6 to 9 are photogaphs of exemplary semi-finshed boards and laminates according to the invention. Fig. 6 shows the surface of a semi-finished board. Fig. 7 is a view of the edge of said semi-finished board (i.e. a cross-section). Fig. 8 is a view of the edge (i.e. a cross-section) of a three-layered laminate of the invention having spruce wood chips as lower and upper layer and a sunflower seed shell layer as middle layer. Fig. 9 is a view of the edge of a five-layered laminate of the invention (i.e. a cross-section) as obtained in Example 3, showing decorative paper/core paper layer/sunflower seed shell layer/core paper layer/decorative paper in this order.

### Detailed description of the invention

A characteristic feature of the process according to the invention is that particulate biological substrates S and optionally S' are used to produce the particle/polymer composite. According to the invention the particulate biological substrates S comprises sunflower seed shells. More preferably, the particulate biological substrate S consists of sunflower seed shells.

Preferably, the second substrate S' consists of wood chips.

The sunflower seed shells as such are used as such according to the invention. No crushing or milling is required. It is even disadvantageous to use ground or milled sunflower seed shells in terms of mechanical stability of the obtained particle/polymer biocomposite.

Sunflower seed shells are obtained by harvesting sunflower seeds from dried sunflowers by mechanically peeling where the shells are remaining as waste.

The additional biological substrate S' which can optionally be used according to the invention may be fine wood chips, e. g. spruce-, fir-, beech-, pine-, hardwood-, fine chips or any other wood chips as they are conventionally used for surface layers in particle board production.

The sunflower seed shells as biological substrate S can be directly used as obtained after peeling the sunflower seeds, or can be dried if necessary, under normal conditions or by conventional drying methods (e.g. rotary kiln dryer, convection dryer, fluidized bed dryer, microwave dryer), preferably to a residual moisture content of ≤ 10 % by weight, preferably ≤ 6 % by weight, most preferably ≤ 3,5 %, before being used in the process according to the invention. The residual moisture is determined as described below.

Wood chips used according to the invention may have a particle size of ≤ 5 mm length and ≤ 2 mm width. The ratio length/width is preferably ≤ 20, more preferably ≤ 5 and most preferably ≤ 3. The wood chips preferably have a residual moisture of ≤ 3,5 %. The residual moisture is determined as described below.

The optional second biological substrate S', i.e. the fine wood chips, if used, are dried to a residual moisture content of ≤ 5% by weight, preferably ≤ 3,5 % by weight, under normal conditions or by the same methods as mentioned for the sunflower seed shells.

According to the invention, another essential component is a thermoplastic polymer P, whose glass transition temperature TgP measured according to DIN EN ISO 11357-2 (2013-09) is ≥ 20 °C, preferably ≥ 40 °C and particularly preferably is ≥ 60°C.

Thermoplastic polymers P are understood to be those polymers which can be formed in a certain temperature range (≥ TgP), whereby this process is reversible, which means that it can be repeated several times by cooling and reheating. However, care must be taken to ensure that the polymer is not heated to the point where thermal decomposition of the polymer begins.

According to the invention, the thermoplastic polymer P is also referred to as a binder or binding agent.

Fundamentally, thermoplastic polymers are to be distinguished from thermosetting polymers (duroplasts), which are not reversibly deformable after their manufacture, for example by curing. These are not suitable according to the invention.

All thermoplastic polymers which have a glass transition temperature ≥ 20 °C determined according to the above-mentioned determination method can be used according to the process, such as acrylonitrile/butadiene/styrene copolymers, polyamides, polyacetates, homo- or copolymers of (meth)acrylates, Styrene acrylates, polycarbonates, polyesters, such as polyethylene terephthalates, polyolefins, such as polyethylenes or polypropylenes, acid-modified polypropylenes, polystyrenes, polyetherketones, polylactic acid, ethylene/acrylic acid copolymers, or polyvinyl chlorides.

The polymer P of the invention does not comprise any intentionally added formaldehyde or structural moieties derived from formaldehyde.

Accordingly, formaldehyde present in the final product, if any, derives from the second substrate S', i.e. wood chips, wherein it may occur naturally, or is an inevitable impurity. In comparison to wood, sunflower shells contain formaldehyde in very low amounts.

The formaldehyde emission of the particle/polymer biocomposite and/or the moldings and/or laminates obtained therefrom of the present invention can be determined according to VDA 275 "Formteile für den Fahrzeuginnenraum; Bestimmung der Formaldehydabgabe".

The inventors have determined the formaldehyde emission of spruce chips and sunflower seed shells according to said method and have found that spruce chips emitted 32 ppm of formaldehyde, whereas sunflower sheet shells emitted only 2 ppm of formaldehyde.

In principle, the thermoplastic polymer P can be used in aqueous dispersion and in aqueous solution. However, aqueous dispersions of polymers P are preferably used. According to the invention, aqueous polymer solutions only play a minor role.

The polymer P is advantageously used in the form of an aqueous dispersion (hereinafter referred to as "aqueous polymer P dispersion"), produced by radically induced aqueous emulsion polymerization of ethylenically unsaturated monomers.

Surprisingly, it has been found by the inventors that the use of aqueous dispersions, which would be expected to have a low binding capacity for sunflower seed shells, because sunflower seed shells have a waxy hydrophobic surface, can be used advantageously, and that sunflower seed shells are surprisingly bound in high quantities.

This is due to the fact that the aqueous binder dispersion consists of polymer particles having a particles size in the range of 100-300 nanometers and enables a very homogeneous distribution on the surface of the sunflower seed shells during wetting and drying. Additionally the thermoplastic polymers have the ability of film forming during drying, so that the surface of the sunflower husk is homogenously covered by a polymer film.

According to the invention, commercially available aqueous polymer dispersions can be used advantageously, which are usually offered as binders e.g. for paints, coatings or similar, e.g. acForm^{®}, in particular acForm^{®} 2888, Acronal^{®} S940, Acronal^{®} 12 DE, Acronal^{®} 969 (all BASF AG).

The mixing of particulate substrate S, and optionally S', which are mixed separately, and thermoplastic polymer P is carried out in a manner familiar to the expert, for example in a mixing drum, e.g. a concrete mixer, a fluidized bed or in a mixing extruder. The continuously or discontinuously operated mixing drum such as a concrete mixer is advantageously used if the polymer P is used, in liquid form, in particular as an aqueous dispersion. The dispersion may be sprayed onto the bioparticulate material while rotating the drum. A mixing extruder can also be used if the polymer P is used in the form of an aqueous dispersion or solution.

These mixing methods are applicable for the sunflower seed shells and the optional additional substrate, i.e. wood chips.

For each layer of the final structure the same polymer P may be used, or different polymers P may be used for different layers.

After the mixing step, the resulting substrate S/Polymer P mixture is converted into a particle layer, which is then compacted at a temperature ≥ TgP to a thermoformable and/or embossable particle/polymer composite.

According to the invention, a particle layer is understood to be a layer of densely packed particles. The particle layer is obtained, for example, by scattering the polymer/substrate mixture evenly over a surface or in continuous operation on a conveyor belt. For example, the mixture can be scattered into a frame, e.g. with a scattering device adapted to the frame size, until the desired weight per unit area is achieved. The desired weight per unit area of the densely packed particle layer is, for example ≥ 500 and ≤ 30,000 g/m². The desired bulk density of the densely packed particle layer is 0.12 to 0.16 g/cm³. The surface of the particle layer can then be smoothed, if desired, e.g. with a doctor blade, and can optionally be pre-compressed, e.g. with a calender roller or a press stamp adapted to the size of the frame thereby increasing the bulk density by e.g. a factor of approx. 1.1 to 2.0.

The density of the densely packed layer and/or the pre-compressed layer can be calculated (mass per volume).

According to the invention, this particle layer can have a thickness of ≥ 0.3 and ≤ 50 cm, advantageously ≥ 0.3 and ≤ 30 cm and especially advantageously ≥ 0.3 and ≤ 20 cm.

The process according to the invention is advantageously carried out in such a way that the polymer P is used in the form of an aqueous dispersion, wherein a drying step follows process step (i), during and/or after process step (ii) or (iii), for example in a drying tower or fluidized bed dryer after process step (i) or by means of a hot air blower during or after process step (ii) or by venting during or after process step (iii).

If desired, usual additives can be added to the polymer/substrate mixture, e.g. biocides, flame retardants, waxes, fragrances, dyes, pigments, UV-protection agents and/or other usual additives used in wood based panel production.

If a commercially available polymer dispersion is used, the polymer/substrate mixture naturally contains the auxiliary substances already contained in the polymer dispersion, such as dispersants and biocides.

If several layers are formed, if desired, each layer can be pre-compressed by slight compressing at normal ambient temperature as mentioned above.

In the context of the invention, drying is to be understood as meaning that the residual moisture content of the respective obtained substrate S/Polymer P mixture is reduced to ≤ 10 weight % and advantageously to ≤ 5 weight %, preferably to ≥ 2 and ≤ 5 weight %.

According to the invention, residual moisture content is understood to be the percentage difference in weight, relative to the substrate S/Polymer P mixture or the substrate itself used, which results when 1 g of substrate S/Polymer P mixture or substrate, respectively, is dried in a drying oven at 120 °C for one hour.

The particle layer or structure of one or more particle layers thus obtained is then compressed at a temperature ≥ TgP to form a thermoformable and/or embossable particle/polymer biocomposite. Compression is understood to mean when the particle layer is compressed under pressure at a temperature ≥ TgP to form a thermoformable and/or embossable polymer/particle biocomposite. By this pressing, the density of the particle/polymer biocomposite increases by a factor of ≥ 1 and advantageously by a factor of ≥ 1.5 compared to the corresponding particle layer, depending on the particulate substrate S used. The final density of the particle/polymer biocomposite, optionally comprising different substrates S and S', preferably is 0.6 to 0.9 g/cm³. That is, the particle/polymer biocomposite of the invention has a considerably lower density than conventional biocomposites such as wood biocomposites or sunflower seed shell biocomposites wherein ground sunflower seed shells are used as fillers, which have a density ≥ 1 g/cm³.

In this context, it is important to note that the particle/polymer biocomposite according to the invention advantageously has a planar flat shape. Of course, the particle/polymer biocomposite according to the invention can also have any non-planar three-dimensional shape, depending on the selected press mold.

In the manufacturing of the particle/polymer biocomposite, advantageously the ratio between substrate S and polymer P is between ≥ 3 and ≤ 50 wt.% and with particular advantage ≥ 3 and ≤ 30 wt.%, and advantageously ≥ 5 and ≤ 20 wt.% of polymers P (calculated as polymer, or, if a polymer dispersion is used, as the total polymer content of the dispersion) are used, based on the quantity of sunflower seed shells and/or wood chips used, respectively. That means, the composite of the invention contains a very high amount of sunflower seed shells and optionally wood chips.

The amount of polymer P relative to the additional biological substrate, if used, i.e. the wood chips, is preferably within the same ranges as defined for the sunflower seed shells.

By the method according to the invention, especially particle/polymer biocomposites are accessible, whose basis weight is ≥ 500 and ≤ 30,000 g/m², especially advantageously ≥ 1,000 and ≤ 20,000 g/m² and advantageously ≥ 1,000 and ≤ 10,000 g/m². The thermoformable and/or embossable particle/polymer biocomposites obtainable by the process according to the invention are flat in one preferred design form or can have a three-dimensional structure in another preferred design form.

The invention also includes the thermoformable and/or embossable particle/polymer biocomposites obtainable by the method according to the described process of the invention.

The use of a particle/polymer biocomposite in accordance with the invention for the manufacturing of a particle/polymer molding which differs in its shape and/or surface structure from the thermoformable and/or embossable particle/polymer biocomposite used is also included in the invention.

Correspondingly, the invention includes a process for the manufacturing of a particle/polymer molding, which is characterized in that a thermoformable and/or embossable particle/polymer biocomposite according to the invention is heated to a temperature ≥ TgP, the particle/polymer biocomposite thus obtained is brought into the desired shape and/or surface structure of the particle/polymer molding at a temperature ≥ TgP and the particle/polymer molding obtained is then cooled to a temperature < TgP while retaining its shape and/or surface structure.

According to the invention, the particle/polymer biocomposite is heated to a temperature which corresponds at least to the glass transition temperature TgP of the polymer P. With advantage, the particle/polymer biocomposite is heated to a temperature TgP + ≥ 10 °C and with special advantage TgP + ≥ 30 °C and the resulting particle/polymer molding is cooled to a temperature TgP - ≥ 10 °C and with special advantage TgP - ≥ 30 °C.

According to the invention the particle/polymer molding is usually produced in a preferred design form by means of a heated molding press, at least one contact surface of which has a temperature ≥ TgP and optionally a defined surface structure (i.e. a pattern protruding and/or recessing from the contact surface) and the shape of which corresponds to the negative shape of the particle/polymer molding and cooling of which takes place outside or inside the molding press. In this design, the heating and forming process take place in the heated molding press. Of course, according to the invention, it is also possible that the particle/polymer biocomposite is heated outside the molding press to a temperature ≥ TgP and then formed in the molding press without or with further heating to form the particle/polymer molding and, if necessary, also cooled to a temperature < TgP. In this preferred design, the heating and the forming and cooling processes take place separately.

In another preferred design, the heating process of the particle/polymer biocomposite is carried out by passing it between two metal rollers arranged axially parallel and rotating in the direction of passage, whereby
a) at least one of the metal rollers has a defined surface structure of the contact surface to the particle/polymer biocomposite and a temperature ≥ TgP,
b) the gap between the contact surfaces of the two metal rolls is smaller than the thickness of the particle/polymer biocomposite, and
c) the passage of the particle/polymer composite between the contact surfaces of the two metal rolls is effected at a speed corresponding to the rotational speed of the contact surfaces of the two metal rolls.

It is self-explanatory for the expert that the defined surface structure of the contact surface of the at least one metal roller represents the negative of the surface structure formed on the particle/polymer molding. In the present design, the gap width corresponds advantageously to the thickness of the particle/polymer biocomposite multiplied by a factor ≤ 0.98, particularly advantageously by a factor ≤ 0.6 and particularly advantageously by a factor ≤ 0.25. In order to form optimally positive surface structures on the polymer/particle molded part, it is essential that the polymer/particle composite is passed between the contact surfaces of the two metal rolls at a speed (in m/sec) that corresponds to the rotational speed of the contact surfaces (in m/sec) of the two metal rolls. This design is particularly suitable for the manufacturing of flat, planar particle/polymer moldings with an embossed surface structure.

The thickness of the particle/polymer biocomposite before the heating process is usually in the range ≥ 1 mm and ≤ 10 cm, often in the range ≥ 1 mm and ≤ 3 cm and often in the range ≥ 1 mm and ≤ 2 cm.

In a further advantageous design form, the process according to the invention is carried out in such a way that before or after the heating process, but before the forming step, an intermediate process step is carried out in which at least one sheet-like decorative material with a thickness ≤ 10 mm is applied to one and/or the other surface, which optionally can be ground mechanically to improve adhesion and surface quality, of the particle/polymer composite.

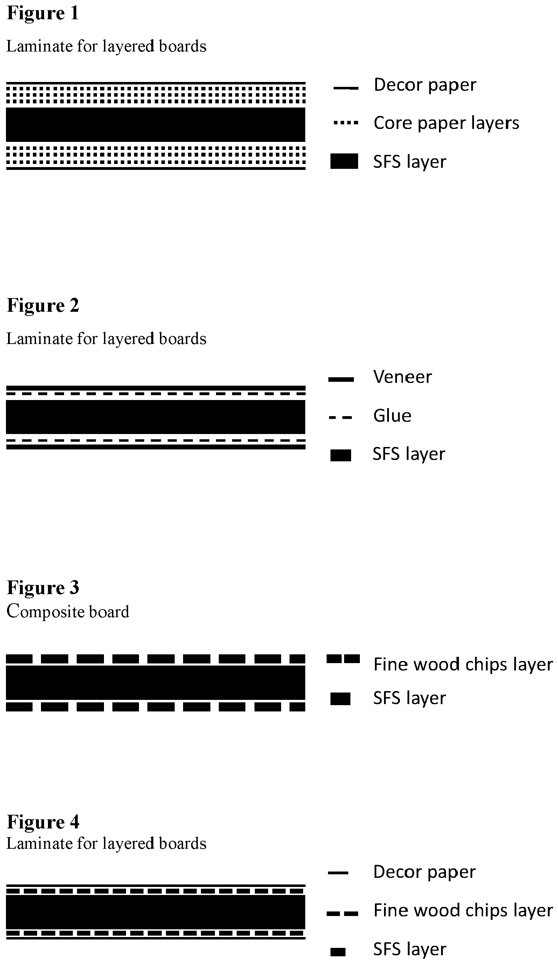

The decorative material which can be used according to the invention is advantageously a textile fabric, such as a non-woven fabric, a woven or knitted fabric made of natural or synthetic fibers, a plastic film, such as a thermoplastic polyvinyl chloride, polyolefin or polyester film, wood veneers or a HPL (high pressure laminate), CPL (continuous pressure laminate), decorative paper or a melamine resin film (also known as a melamine resin overlay) or all other standard decorative materials which are used in wood working industry. An exemplary design is shown in Figs. 1, 2 and 4.

The additionally layers such as decorative paper, core paper, veneer etc. can be applied by using a conventional laminating glue such as wood glue, according to need.

The flat decorative material usually has a thickness ≤ 10 mm. The thickness is preferably ≤ 3 mm, often advantageously ≤ 2 mm and often especially advantageously ≤ 1 mm.

The obtained laminate usually has a density of 0.75 to 1.1 g/cm³ and is larger than the density of the particle / polymer biocomposite used as a starting material by a factor of 1.1 to 2.0.

According to the invention, therefore, the particle/polymer moldings accessible by the aforementioned method, which are also designated as laminates, are also included.

According to the invention, it is also important that both the process for producing the thermoformable and/or embossable particle/polymer biocomposite and the process for producing the particle/polymer molding and laminate can be carried out continuously or discontinuously.

The particle/polymer molded parts and laminates accessible according to the invention have good thermal dimensional stability as well as good mechanical properties and are therefore advantageously suitable as elements in buildings, for example as wall panels, floor elements, room dividers, partition walls, ceiling panels, door leaves or wall decorating parts and also in furniture as molded furniture parts, for example as seat or back surfaces. The use of the particle/polymer moldings as elements in buildings and in furniture is therefore preferred according to the invention.

Generally, the water content before pressing is a problem when using thermosetting binders. As the mixture of thermosetting binder and sunflower seed shells has to be compacted to the final product in one step, since post-compaction is not possible, the water content has to be very low at the beginning (< 3%) to prevent de-gassing of aqueous water vapour which may form bubbles which may lead to surface damages. The expert knows this occurrence as "bursts".

Chipboard, i.e. wood particles plus thermosetting binders, is therefore only produced up to a density of 0.75 g/cm³. If these were compressed to higher densities during pressing and hardening of the binder in the press, bubbles and bursts would form after opening the press due to the high water vapor pressure (pressing at 180-220°C = 8-12 bar water vapor pressure), which would tear the board open and make it unusable.

Independent of the water content, at a density below 0.75 g/cm³ the chipboard is porous and the water vapor can evaporate during the process.

This behavior is also known in the production of HPL, CPL or synthetic resin pressed wood. PF resin impregnated papers or veneers are pressed into boards in hot presses and hardened. The residual moisture content of the impregnated paper or veneer must be below 3%, otherwise bubbles and bursts will occur.

However, in order to produce mechanically stable boards with sunflower seed shells and especially high percentages of them, it is necessary to obtain higher densities than 0.75 g/cm³.

But if a mixture of sunflower seed shells and binder with a moisture content higher than 8% were compressed to densities > 0.75 g/cm³ in the first pressing step, bubbles and bursts would occur also.

Therefore, the invention for the first time enables the production of panels, i.e. laminates, from sunflower seed shells having a density > 0.75 g/cm³ in an overall two-step process as defined in claim 10.

It has been shown that, according to the invention, when using thermoplastic binders, a sheet (prepreg) with a lower density can be produced in a first process step, which can then be pressed to higher densities in a second process step. This is possible because during the first process step, aiming for lower density, the residual moisture can evaporate such that the semi-finished board is safe against bubbles and bursts. During the first process step and between the first and second process step, the residual moisture can dissipate further such that no bubbles or bursts occur in the second pressing step as well.

The use of thermoplastic binders according to the invention showed in a surprising way:
- a good distribution of the binders on the sunflower seed shells surfaces, even if binders in aqueous phase are used
- that molded parts with higher density as e. g. particle boards with improved mechanical properties can be produced by a two-step process.

### General process for the production of panels from impregnated sunflower seed shells (SFS)

### Raw materials

Sunflower seed shells (SFS) with a residual moisture content of < 10 %.

Dispersion of a thermoplastic binder, such as acForm^{®} from BASF or other suitable dispersions of a thermoplastic polymer. The solids content of the dispersion is preferably > 40% or > 50% and particularly preferably > 60%.

### Equipment

Concrete mixer with 120 L volume, spray gun, scale, spreading frame, hot press

### Impregnating of sunflower seed shells (SFS)

The SFS is impregnated in such a way that the calculated amount of SFS is put into a concrete mixer (120 1 volume) and the calculated amount of binder dispersion is sprayed onto the SFS by means of a spray gun while turning the mixer. For example, at a target ratio of 85:15 (SFS:B; s:s), 15 parts by weight of polymer (dry) are added to 85 parts by weight of SFS (atro) ("atro" means "absolute dry", i.e. no loss of weight upon heating). Depending on the residual moisture content of the SFS and the solids content of the dispersion, the required masses are obtained. After spraying the necessary amount of dispersion, the concrete mixer is allowed to rotate for another 5 minutes to ensure homogeneous distribution.

### Drying impregnated SFS

If desired, the impregnated SFS can be dried at 90 °C in a drying cabinet to a residual moisture of 5%. Drying can also be done by spreading the impregnated SFS on a carrier to create a large surface and letting it dry overnight under room conditions. The solids content of the impregnated SFS is determined as described above.

### Production of semi-finished products from impregnated SFS

In wooden frames of different sizes, the impregnated SFS are distributed as evenly as possible over the surface. This can be done with a spreading device that is adapted to the wooden frame. The required quantity of impregnated SFS with the measured residual moisture is calculated based on the frame size, the thickness to be achieved and the desired density. (Example: frame: 15 x 25 cm, thickness: 12 mm, density: 0.65 g/cm³ => amount of SFS in g = 0.65 g/cm³ x 15 x 25 x 1.2 = 292.5 g). The SFS scatter particle layer thus produced is placed in a press and pressed to the desired thickness / density at a temperature between 110-200 °C, preferably between 140-180 °C. The pressing time of the SFS particle layer depends on the desired thickness of the semi-finished sheet and the temperature used. For a temperature of 160°C the pressing time can be calculated with a factor of 15 sec per mm (example: 10 mm thickness requires 10 x 15 sec = 150 sec. pressing time at 160°C). For other temperatures, other pressing time factors must be applied. The moisture content of the pressed semi-finished product should be about 5%.

### General process for the production of laminates from SFS semi-finished boards and decorative layers

1. The SFS semi-finished boards obtained as described above are sanded on both sides by 1-2 tenths of a mm.
2. Single layers of impregnated core paper, known to the specialist from HPL production, and a corresponding decor paper are positioned on the top and bottom of the sanded SFS semi-finished sheet, respectively, depending on the mechanical properties to be achieved (see Figure 1) and compressed together at 140 °C for 300 seconds, e.g. between two Teflon films, structured press plates or matting films, at a pressure > 10 bar to the desired average density of 1.0-1.1 g/cm³.

After pressing, the decorative core paper SFS laminate is removed from the press and placed between two aluminum plates to cool down.

### General process for the production of laminates made of SFS and fine wood chips

### Raw materials

Sunflower seed shells (SFS) with a residual moisture of < 10%
Fine chips from spruce or other woods with a residual moisture of < 4%
Particle size of the fine chips: length ≤ 5 mm ; width ≤ 2 mm
Ratio length : width ≤ 10, preferably ≤ 5, especially preferred ≤ 3

Dispersion of a thermoplastic binder, such as acForm^{®} from BASF or other suitable dispersions of a thermoplastic polymer The solids content of the dispersion is preferably > 40% or > 50% and particularly preferably > 60%.

### Equipment

Concrete mixer with 120 L volume, spray gun, scale, spreading frame, hot press

### Impregnating of the sunflower seed shells

The SFS is impregnated in such a way that the calculated amount of SFS is put into a concrete mixer (120 1 volume) and the calculated amount of binder dispersion is sprayed onto the SFS by means of a spray gun while turning the mixer. For example, at a target ratio of 85:15 (SFS:B; f:f), 15 parts by weight of polymer (dry) are added to 85 parts by weight of SFS (atro = absolutely dry). Depending on the residual moisture content of the SDS and the solids content of the dispersion, the required masses are obtained. After spraying the required amount of dispersion, the concrete mixer is allowed to rotate for another 5 minutes to ensure even distribution.

### Drying impregnated SFS

If desired, the impregnated SFS can be dried at 90 °C in a drying cabinet to a residual moisture of 5%. Drying can also be done by spreading the impregnated SFS on a carrier to create a large surface and letting it dry overnight under room conditions. The solids content of the impregnated SFS is determined.

### Impregnating of the spruce fine chips (SFC)

The SFC is impregnated by placing the calculated amount of SFC in a concrete mixer (120 1 volume) and spraying the calculated amount of binder dispersion with a spray gun onto the SFC while rotating the mixer. For example, at a target ratio of 85:15 (SFC:B; ff), 15 parts by weight of polymer (dry) are added to 85 parts by weight of SFC (atro). Depending on the residual moisture content of the SFC and the solids content of the dispersion, the required masses are obtained. After spraying the required amount of dispersion, the concrete mixer is allowed to rotate for another 5 minutes to ensure even distribution.

### Drying impregnated SFC

If desired, the impregnated SFC can be dried at 90 °C in a drying cabinet to a residual moisture of 5%. Drying can also be done by spreading the impregnated SFC on a film to create a large surface area and allowing it to dry overnight under room conditions. The solids content of the impregnated SFC is determined.

### Production of semi-finished boards from impregnated SFS and impregnated SFC

In a wooden frame in desired sizes, the first half of the calculated amount of impregnated SFC is scattered, evenly distributed and pre-compacted with a press stamp that corresponds to the inner dimension of the wooden frame. Then the impregnated SFS are scattered into the wooden frame, distributed as evenly as possible over the surface and also pre-compacted with the press stamp. Then the second half of the impregnated SFC is scattered in and the whole particle layers are pre-compressed (see Figure 3). The required quantity of impregnated SFS and SFC with the measured residual moisture is calculated with the frame size, the thickness to be achieved, the desired density and the defined ratio of the individual layers of SFC / SFS / SFC. The SFC-SFS-SFC particle layers thus produced is placed in a press and pressed to the desired thickness / density at a temperature between 110-200°C, preferably between 140-180°C. The pressing time of the SFC-SFS-SFC-particle layers depends on the desired thickness of the semi-finished product plate and the temperature used. For a temperature of 160°C the pressing time can be calculated with a factor of 15 sec/mm (example: 12 mm thickness requires 12 x 15 sec = 180 sec. pressing time at 160°C). For other temperatures, other pressing time factors must be applied. The moisture content of the pressed semi-finished product should be about 5 %.

### Examples

### Example 1: Production of SFS semi-finished product

### 1. Impregnating of the SFS in the concrete mixer

### Raw-Materials

Sunflower seed shells with residual moisture of 9.7%

Binder dispersion acForm^{®} 2888 (BASF) with solids content 50%.

Impregnating degree: 15 parts binder (solid) to 85 parts SFS (atro)

| SFS (residual moisture 9,7%) | SFS dry | Binder, 50% | Binder, solid | Mixture | Mixture after drying | Residual moisture after drying |
|---|---|---|---|---|---|---|
| 1329 g | 1200 g | 423 g | 212 g | 1752 g | 1486 g | 5 % |

After impregnating, the composition is dried overnight. A residual moisture of 5 % is obtained. The bulk density of the impregnated SFS is 0.13 g/cm³.

### 2. Production of a semi-finished SFS board

Dimensions of target semi-finished board: 250 x 150 mm; thickness 12 mm ; density 0.65 g/cm³
volume: 450 cm³; weight: 292.5 g

From a 6 cm thick wood fiber insulation board with a density of 0.18 g/cm³, a frame with internal dimensions of 25 x 15 x 6 cm is built and placed on an aluminum carrier plate. The frame volume is 2,250 cm³. 292.5 g of the impregnated SFS are poured into this frame and evenly distributed.

The filled frame with the carrier plate is placed in the press preheated to 180 °C and compressed to 12 mm within 144 seconds (pressing time factor = 12 sec/mm x 12 mm). After pressing, the semi-finished board is removed from the press, the wood fiber frame is removed and the semi-finished board is cooled down. After 24 hours of storage a residual moisture of 5 % is achieved. The semi-finished board has a density of 0.65 g/cm³.

### Example 2: Production of SFS semi-finished product

### 1. Impregnating of the SFS in the concrete mixer

### Raw-Materials

Sunflower seed shells with residual moisture content of 9.7%
Binder dispersion acForm^{®} 2888 (BASF) with solids content 50%.
Impregnating degree: 15 parts binder (solid) to 85 parts SFS (atro)

| SFS (residual moisture 9,7%) | SFS dry | Binder, 50% | Binder, solid | Mixture | Mixture after drying | Residual moisture after drying |
|---|---|---|---|---|---|---|
| 1329 g | 1200 g | 423 g | 212 g | 1752 g | 1486 g | 5 % |

After impregnating, drying in a drying cabinet at 90 °C until a residual moisture of 5 % is achieved.

### 2. Production of a semi-finished SFS board

Dimensions target semi-finished product plate: 250 x 150 mm; thickness 10.2 mm; density 0.84 g/cm³
volume: 450 cm³; weight: 320 g

From a 6 cm thick wood fiber insulation board with a density of 0.18 g/cm³, a frame with internal dimensions of 25 x 15 x 6 cm is built and placed on an aluminum carrier plate. The frame volume is 2,250 cm³. 320 g of the impregnated SFS are poured into this frame, slightly pre-compressed (pressing) and evenly distributed.

The filled frame together with the carrier plate is placed in the press preheated to 160 °C and compressed to 10.2 mm within 150 seconds (pressing time factor = 15 sec/mm x 10 mm). After pressing, the semi-finished board is removed from the press, the wood fiber frame is removed and cooled down. After 24 hours of storage a residual moisture of 5% is achieved. The semi-finished board has a density of 0.840 g/cm³.

### Example 3: Production of an SFS laminate from SFS semi-finished board, core papers and decorative papers

A 250 x 150 x 12 mm SFS semifinished board (sanded on both sides) with a density of 0.65 g/cm³ obtained as described above is coated with impregnated core papers and decorative papers as shown in Figure 1 and compressed to 10 mm within 300 seconds in the hot press preheated to 140 °C at a pressure > 10 bar.

In the process, the core of the SFS semi-finished board is compressed from 0.65 g/cm³ to approx. 0.90 g/cm³ and the core paper with a density of about 1.35 g/cm³ with the entire laminate having an average density of 1.0-1.1 g/cm³.

| SFS Composite weight (g) | SFS Density | Core paper Weight | Decorative-paper Weight | Laminate Weight | Laminate Thickness | Average Laminate Density |
|---|---|---|---|---|---|---|
| 292 | 0.65 g/cm³ | 87 g | 15 g | 394 g | 10 mm | 1.05 g/cm³ |

The bending modulus of elasticity of a laminate produced in this way, determined according to ISO 178, is 6,800 N/mm² +/- 250 and the laminate shows a bending stiffness of 65 N/mm² +/- 3, determined according to ISO 178 as well.

Densities are determined according to this specification by a density profile measerument apparatus. An apparatus "Labor-Dichteprofilmessanlage DA-X5", manufactured by GreCon, can be used. The density profile of the laminate obtained in this Example is shown in Fig. 5.

### Example 4: Production of an SFS laminate from SFS semi-finished board and veneer layers

A 250 x 150 x 12 mm SFS semi-finished board (sanded on both sides) with a density of 0.65 g/cm³ obtained as described above is covered with veneer layers of 0.8 mm thickness, coated on one side with commercially available laminating glue, according to the structure in Figure 2, and compressed to 10 mm in the hot press preheated to 140 °C within 300 seconds at a pressure > 10 bar.

In the process, the core of the SFS semi-finished board is compressed from 0.65 g/cm³ to approx. 0.93 g/cm³, with the entire laminate having an average density of 0.86 g/cm³.

| SFS composite weight | SFS Density | Veneer Weight | Glue Weight | Laminate Weight | Laminate Thickness | Average Laminate Density |
|---|---|---|---|---|---|---|
| 292 g | 0.65 g/cm³ | 30 g | 30 g/m² | 323 g | 10 mm | 0.86 g/cm³ |

The bending modulus of elasticity of the laminate produced in this way, determined according to ISO 178 transverse to the veneer fiber direction, is, depending on the veneer wood used, here beech: 7,000 N/mm² +/- 250 and shows a bending stiffness of 72 N/mm² +/- 5 measured according to ISO 178.

### Example 5: Production of an SFS laminate from SFS semi-finished board and veneer layers

A 250 x 150 x 10.2 mm SFS semi-finished board (sanded on both sides) with a density of 0.84 g/cm³ obtained as described above is covered with veneer layers of 0.8 mm thickness, coated on one side with commercially available laminating glue, as shown in Figure 2, and compressed to 11 mm within 300 seconds in the hot press preheated to 140 °C at a pressure > 10 bar.

In the process, the core of the SFS semi-finished board is compressed from 0.84 g/cm³ to approx. 0.91 g/cm³, with the entire laminate having an average density of 0.85 g/cm³.

| SFS composite weight | SFS Density | Veneer weight | Glue weight | Laminate weight | Laminate Thickness | Avergae Laminate Density |
|---|---|---|---|---|---|---|
| 320 g | 0.84 g/cm³ | 30 g | 30 g/m² | 351 g | 11 mm | 0.85 g/cm³ |

The bending modulus of elasticity of the laminate produced in this way, determined according to ISO 178 transverse to the veneer fiber direction, is, depending on the veneer wood used, here beech: 7,000 N/mm² +/- 250 and shows a bending stiffness of 75 N/mm² +/- 5 determined according to ISO 178.

### Example 6: SFS-SFC laminate production

### 1. Impregnating of the SFS in the concrete mixer

Sunflower seed shells with a residual moisture of 9.7%
Binder dispersion acForm^{®} 2888 (BASF) with solids content 50%.
Impregnating degree: 15 parts binder (fixed) to 85 parts SFS (atro)

| SFS (Residual moisture 9.7%) | SFS dry | Binder, 50% | Binder, solid | Mixture | Mixture after drying | Residual moisture after drying |
|---|---|---|---|---|---|---|
| 1329 g | 1200 g | 423 g | 212 g | 1752 g | 1486 g | 5 % |

After impregnating, the composition is dried overnight. A residual moisture of 5% is obtained. The bulk density of the impregnated SFS is 0,13 g/cm³.

### 2. Impregnating of the SFC in the concrete mixer

Spruce fine chips with a residual moisture of 3%
Binder dispersion acForm^{®} 2888 (BASF) with solids content 50%.
Impregnating degree: 15 parts binder (fixed) to 85 parts SFC (atro)

| SFC (Residual moisture 3 %) | SFC dry | Binder, 50% | Binder, as solid | Mixture | Mixture after drying | Residual moisture after drying |
|---|---|---|---|---|---|---|
| 1237 g | 1200 g | 423 g | 212 g | 1660 g | 1486 g | 5 % |

After impregnating, the composition is dried overnight. A residual moisture of 5% is obtained.

### 3. Production of a SFC-SFS-SFC laminate (structure according to Figure 3)

Dimensions of target semi-finished board: 250 x 150 mm; thickness 12 mm; density 0.84 g/cm³
Volume: 450 cm³; Weight: 378 g; Ratio SFC : SFS : SFC should be 1/6 : 2/3 : 1/6

Using a 6 cm thick wood fiber insulation board with a density of 0.18 g/cm³, a frame with internal dimensions of 25 x 15 x 6 cm is built and placed on an aluminum carrier plate. The frame volume is 2,250 cm³. 1/6 of the total mass of the laminate (378 g x 1/6 = 63 g) of impregnated SFC is first scattered into the frame, evenly distributed and pre-compressed. Then, 2/3 of the total mass of the laminate (378 g x 2/3 = 252 g) of the impregnated SFS are scattered, evenly distributed and pre-compressed. Then another 1/6 of the total mass of laminate of impregnated SFC is scattered on top, evenly distributed and pre-compressed.

The filled frame with the carrier plate is placed in the press preheated to 160 °C and compacted to 12 mm within 180 seconds (pressing time factor = 15 sec/mm x 12 mm). After pressing, the board is removed from the press, the wood fiber frame is removed and the board is cooled down. After 24 hours of storage a residual moisture of 5% is achieved. The semi-finished board has a density of 0.84 g/cm³.

| SFC Weight | SFS Weight | SFC Weight | Laminate Weight | Laminate Thickness | Laminate Density |
|---|---|---|---|---|---|
| 63 g | 252 g | 63 g | 378 g | 12 mm | 0.84 g/cm³ |

The bending modulus of elasticity of the laminate produced in this way, determined according to ISO 178, is 2,200 N/mm² +/- 270 and the laminate shows a bending strength of 22 N/mm² +/- 3 determined according to ISO 178.

### 4. Production of an SFC-SFS-SFC laminate with decorative surfaces

(construction according to Figure 4)

Dimensions target semi-finished panel: 250 x 150 mm; thickness 10 mm ; density 0.82 g/cm³ with decorative surface

### Step 1: Production of a SFC-SFS-SFC laminate semi-finished product

Dimensions: 250 x 150 mm ; thickness 12 mm ; density 0.65 g/cm³
Volume: 450 cm³ ; Weight: 292.5 g ; Ratio SFC : SFS : SFC should be 1/6 : 2/3 : 1/6

Using a 6 cm thick wood fiber insulation board with a density of 0.180 g/cm³, a frame with internal dimensions of 25 x 15 x 6 cm is built and placed on an aluminum carrier plate. The frame volume is 2,250 cm³. In this frame, 1/6 of the total mass of the laminate (292.5 g x 1/6 = 48.75 g) of impregnated SFC is first scattered into the frame, evenly distributed and pre-compressed. Then 2/3 of the total mass of the laminate (292.5 g x 2/3 = 195 g) of the impregnated SFS are scattered on top, evenly distributed and pre-compressed. Then another 1/6 of the total mass of the laminate of impregnated SFC is scattered on top, evenly distributed and pre-compressed.

The filled frame with the carrier plate is placed in the press preheated to 160 °C and compacted to 12 mm within 180 seconds (pressing time factor = 15 sec/mm x 12 mm). After pressing, the board is removed from the press, the wood fiber frame is removed and cooled down. After 24 hours of storage a residual moisture of 5% is achieved. The semi-finished board has a density of 0.65 g/cm³.

### Step 2: Production of an SFC-SFS-SFC laminate with decorative surface

The SFC-SFS-SFC laminate from step 1 is covered on both sides with impregnated decor paper and compressed to a thickness of 10 mm in the preheated hot press at 140 °C. The decor papers are laminated on and the density is increased to 0.82 g/cm³.

| SFC Weight | SFS Weight | FSF Weight | Decor paper Weight | Laminate Weight | Laminate Thickness | Laminate Density |
|---|---|---|---|---|---|---|
| 48.75 g | 195 g | 48.75 g | 15 g | 307.5 g | 10 mm | 0.82 g/cm³ |

The bending modulus of elasticity of a laminate produced in this way, determined according to ISO 178, is: 3,500 N/mm² +/- 320 and the laminate shows a bending stiffness of 45 N/mm² +/- 4 determined according to ISO 178.

## Claims

1. Process of manufacturing a thermoformable and/or embossable particle/polymer biocomposite using at least one particulate biological substrate S and a polymer P, **characterized in that**
(i) a substrate S and the polymer P are homogeneously mixed, then
(ii) the substrate S/polymer P mixture is converted into a particle layer,
(iii) the resulting structure is compressed at a temperature greater than or equal to the glass transition temperature of the polymer P [TgP] to form a thermoformable and/or embossable particle/polymer composite,
where
(a) the substrates S comprises sunflower seed shells;
(b) the polymer P is thermoplastic and has a TgP ≥ 20 °C measured according to DIN EN ISO 11357-2 (2013-09) and
(c) the polymer P does not comprise intentionally added formaldehyde or structural moieties derived from formaldehyde.

2. The process of claim 1, additionally comprising, before step (iii) is carried out, providing one or more additional particle layer(s) below or on top of the first particle layer by carrying out steps (i) and (ii) using a second particulate biological substrate S' and/or the same biological particulate substrate S, each in homogeneous admixture with the polymer P.

3. The process of claim 2, wherein a second substrate S' comprises fine wood chips.

4. The process of any of claims 1 to 3, wherein one or each layer(s) is pre-compressed before depositing the next layer.

5. Process according to any of claims 1 to 4, **characterized in that** the polymer P is used in the form of an aqueous dispersion, a drying step being carried out after each process stage (i), and/or during and/or after each process stage (ii) and/or during and/or after each process stage (iii).

6. Process according to any one of claims 1 to 5, **characterized in that** the weight ratio of each substrate S to polymer is P ≥ 1 and ≤ 30, respectively.

7. Process according to any one of claims 1 to 6, **characterized in that** the particle/polymer biocomposite obtained is sheet-like and has a basis weight ≥ 500 and ≤ 30 000 g/m².

8. Process according to any one of claims 1 to 7, **characterized in that** the compression in step (iii) is carried out in a way that the obtained particle/polymer biocomposite has a density of 0.6 to 0.9 g/cm³.

9. Particle/polymer biocomposite obtainable by a process according to any of claims 1 to 8.

10. Use of a particle/polymer biocomposite according to claim 9 for the manufacturing of a particle/polymer molding which differs in its shape and/or surface structure from the particle/polymer biocomposite used as starting material.

11. Process for the manufacturing of a particle/polymer molding, **characterized in that**
(i) a thermoformable and/or embossable particle/polymer biocomposite according to claim 9 is heated to a temperature ≥ TgP,
(ii) the particle/polymer biocomposite thus obtained is brought into the desired shape and/or surface structure of the particle/polymer molding at a temperature ≥ TgP and
(iii) the particle/polymer molding obtained is then cooled to a temperature < TgP while retaining its shape and/or surface structure.

12. Process for manufacturing a particle/polymer laminate, **characterized in that** in the process of claim 11,
in step (i) the thermoformable and / or embossable particle/polymer biocomposite according to claim 9 is heated to a temperature ≥ TgP together with a decorative sheet, and/or a veneer and / or a protective layer made of HPL, CPL, melamine resin overlay or other usual protective layers from the wood-based materials industry, the obtained laminated structure is brought into the desired shape and / or surface structure in step (ii), and then the particle/polymer molded part obtained with the decorative sheet and/or veneers and/or protective layers, while maintaining its shape and / or surface structure, is cooled to a temperature < TgP.

13. Process according to claim 11 or 12, **characterized in that** the average density of the obtained particle/polymer molding/laminate is 0.75 to 1.1 g/cm³ and is larger than the density of the particle / polymer biocomposite used as a starting material by a factor of 1.1 to 2.0.

14. Particle/polymer molding obtainable by a process according to one of claims 11 to 13.

15. Use of a particle/polymer molding according to claim 14 as an element in structures such as wall panels, room dividers, floors, counters or in furniture.
